# EUROPEAN PATENT APPLICATION

(11) **EP 4 191 295 A1**
(43) Date of publication of application: **07.06.2023**
(21) Application number: 21855042.4
(22) Date of filing: 15.01.2021
(51) Int. Cl.: G02B 6/10, G02B 27/00, G02B 27/01

(54) **OPTICAL ELEMENT AND SYSTEM, AND OPTICAL DEVICE**

(30) Priority: 13.08.2020 CN 202010814795
(71) Applicant: Shanghai Intelight Electronic Technology Co., Ltd., Shanghai 200438 (CN)
(72) Inventor: TAN, Shunyi, Shanghai 200433 (CN)
(74) Representative: Bayramoglu et al.
(86) International application number: PCT/CN2021/072061
(87) International publication number: WO 2022/032985

(57) **Abstract**

An optical device, an optical system and an optical apparatus include a first optical device having a plurality of surfaces. The first optical device has input/output interfaces (11-15, 21, 22, 24, 26, 31-36, 51-55, 61). At least one input/output interface (11-15, 21, 22, 24, 26, 31-36, 51-55, 61) is connected to an optical modulating device (13, 23, 27, 37, 38, 39, 310, 56-59), and at least one optical modulating device (13, 23, 27, 37, 38, 39, 310, 56-59) guides a light ray back to the first optical device after modulating the light ray outputted by the input/output interface (11-15, 21, 22, 24, 26, 31-36, 51-55, 61). By combining advantages of a conventional lens system and the waveguide itself, the present invention can realize a function of modulating the light ray by multiple lens/reflectors within a small size, so as to realize the design and manufacture of ultra-light optical systems/devices. The present invention can be applied to various fields related to light or electromagnetic wave modulation.

## Description

### TECHNICAL FIELD

The present invention relates to the field of optical devices, systems and apparatuses, and particularly relates to an optical device, an optical system and an optical apparatus.

### BACKGROUND

In optical design, in order to modulate (for example, compress or expand, focus and the like) a light ray, the light ray modulated by an optical device (for example, a lens) often needs to be propagated at a certain distance, resulting in a relatively large size of the whole optical system. In volume-sensitive applications such as a head-mounted AR/VR system, and a camera lens of a mobile phone or a wearable device, the reduction in the size of the optical system is a design difficulty.

The Chinses patent, No. CN111123524A, disclosed a diffraction waveguide capable of expanding pupil and emitting light evenly, including a waveguide, an incident grating, a grating array for evening light and an emergent grating. The incident grating, the light equalizing grating array and the emergent grating are spaced and successively arranged on the surface of the waveguide, and the incident light passes through the grating array for evening light and arrives at the emergent grating to form a transmission optical path. By arranging the grating array for evening light on the waveguide between the incident grating and the emergent grating, light of the incident grating passes through the grating array for evening light and then enters the emergent grating. In the prior art, the waveguide system (for example, waveguide with diffraction element, waveguide array and the like) is typically used to only achieve the pupil expanding function, but it fails to take the place of the lens/reflector or other optical devices having modulation functions such as compression or expansion of the light ray.

### SUMMARY

In view of the defects in the prior art, the objective of the present invention is to provide an optical device, an optical system and an optical apparatus. The components in an optical design are integrated to decrease the size of an optical path, so as to decrease the volumes of the devices/system.

An optical device provided by the present invention includes a first optical device having a plurality of surfaces, wherein the first optical device has input/output interfaces.

At least one input/output interface is connected to an optical modulating device, and at least one optical modulating device guides a light ray back to the first optical device after modulating the light ray outputted by the input/output interface.

Preferably, the light ray is propagated in the first optical device.

Preferably, at least two surfaces in the plurality of surfaces are parallel to each other.

Preferably, at least two surfaces in the plurality of surfaces form preset angles (for example, triangular or wedged structures) and/or at least one of the at least two surfaces is a curved surface (for example, a conical surface or a conical surface with a parabolic cross section).

Preferably, different sections of the surface are coated with one or more films, respectively.

Preferably, the film is any one or more of an anti-reflection coating, a highly reflective coating, a micro-structure (for example, a micro-prism, a microlens and the like) film, a grating (a diffraction structure) film, and a film with a polarization dependent structure, a wavelength selection structure or an angle selection structure.

Preferably, the light ray at least experiences total reflection/or reflection once in the first optical device. The angle of the light ray incident to the surface of the device can be greater than the total reflection angle (depending on the refractive index of the device and the refractive index of an external medium of the device, where the external medium can be air, and at the time, the device does not need to be coated). Total reflection of the light ray can also arise from the highly reflective coating on the surface of the device (for example, the surface thereof is coated as a mirror surface), causing the light ray to be reflected into the first optical device.

Preferably, the first optical device is a waveguide device, and the light ray is propagated by total reflection in a waveguide.

Preferably, at least two surfaces of the waveguide device are parallel or unparallel to each other.

Preferably, owing to the included angle between two surfaces of the waveguide or the form of the curved surface of the waveguide, the number of reflection of the light rays experienced before being coupled out of the first optical device from the input/output interface is identical, alternatively, the number of reflection of the light rays experienced between being previously coupled in the first optical device and being currently coupled out the first optical device is identical.

Preferably, the input/output interface includes a light selective design.

Preferably, the light selective design includes selecting the light ray according to any one or more of an angle, a polarization direction, a wavelength and an input/output time point of inputted light (for example, the input is allowed in the previous time period and is not allowed in the current time period, the input is allowed in the next time period, repeat in this way, or the input is controlled according to an external signal).

Preferably, the input/output interface is coated with a film.

Preferably, the input/output interface is coated with a film with a gradually varied refractive index and/or is coated with films with different refractive indexes in different regions.

Preferably, owing to the film, the number of reflection of the light rays experienced before being coupled out of the first optical device from the input/output interface is identical, alternatively, the number of reflection of the light rays experienced between being previously coupled in the first optical device and being currently coupled out the first optical device is identical.

Preferably, owing to the film in combination with the included angle between two surfaces of the waveguide or the form of the curved surface of the waveguide, the number of reflection of the light rays experienced before being coupled out of the first optical device from the input/output interface is identical, alternatively, the number of reflection of the light rays experienced between being previously coupled in the first optical device and being currently coupled out the first optical device is identical.

Preferably, the input/output interface includes at least one of the following conditions: preparation of a diffraction grating (surface grating or volume grating); use of a prism; use of a polarizing prism; use of a microlens/microprism/microreflector and an array formed by microlens/microprism/microreflector; use of a triangular prism; use of a triangular reflector; use of a polarizer; and use of an optical filter.

Preferably, the optical modulating device includes any one or more of a reflector, a microreflector, a microreflector array, a lens, a microlens, a microlens array, a prism, a microprism, a microprism array, a diffraction device, a grating device, a wave plate, a polarizer, an optical rotation device and an optical filter.

Preferably, the optical modulation device includes a spatial light modulator.

Preferably, the spatial light modulator includes any one or more of a liquid crystal on silicon (LCoS), a digital mirror device (DMD), an organic light emitting diode (OLED), a Micro LED and a micro laser beam scanner.

Preferably, the spatial light modulator uses intensity and/or phase modulation.

Preferably, the spatial light modulator is capable of performing dynamic modulation according to external signals.

Preferably, the first optical device is formed by combining a plurality of optical devices through the input/output interface.

Preferably, the combining comprises L-shaped folded combining or Z-shaped combining at a certain angle.

Preferably, the optical devices combined together have identical or different parameters.

Preferably, the parameters include any one or more of a thickness, a length, an included angle between the surface, a form of the surface, a device material and a coated film.

Preferably, the input/output interface is connected to a photosensitive component including at least one of a photographic film, a charge coupled device (CCD) and a complementary metal-oxide-semiconductor transistor (CMOS).

Preferably, the first optical device has the plurality of input/output interfaces, and the light ray is inputted and/or outputted from the different input/output interfaces.

Preferably, the first optical device has the plurality of input/output interfaces, and the light ray is dynamically inputted and/or outputted from the different input/output interfaces selectively.

Preferably, an input/output interface of the first optical device can be connected to a photosensitive device, including but not limited to a CCD, a CMOS, a photographic film and the like, so that the device can be used as a photographic and camera shooting lens by utilizing a principle of reversibility of optical path or used as a photographic and camera shooting device while being used as a display device (for example, AR/VR apparatuses) to provide multiuse and decrease the volume of the device/system/apparatus.

An optical system provided by the present invention includes a first optical device having a plurality of surfaces, wherein the first optical device has input/output interfaces.

At least one input/output interface is connected to an optical modulating device, and at least one optical modulating device guides a light ray back to the first optical device after modulating the light ray outputted by the input/output interface.

An optical system provided by the present invention includes the above optical device.

An optical system provided by the present invention includes the above optical device and system.

Compared with the prior art, the present invention has the following advantages:
By combining advantages of the conventional lens system and the waveguide itself, the present invention can realize a function of modulating the light ray by multiple lens/reflectors within a small size, so as to realize the design and manufacture of ultra-light optical systems/devices. The present invention can be applied to various fields related to light or electromagnetic wave modulation.

### BRIEF DESCRIPTION OF DRAWINGS

By reading and referring to the following detailed description of the drawings related to non-restrictive embodiments, other features, purposes and advantages of the present invention will become more obvious.
FIG. 1 is a schematic diagram of an optical path of an existing lens.
FIG. 2 is a schematic diagram of an optical device in the embodiment 1 (equivalent to the optical path of the existing lens in FIG. 1).
FIG. 3 is another schematic diagram of the optical device in the embodiment 1.
FIG. 4 is an equivalent optical schematic diagram of the embodiment 2.
FIG. 5 is a schematic diagram of the optical device in the embodiment 2.
FIG. 6 is a schematic diagram of the optical device in the embodiment 3.
FIG. 7 is a schematic diagram of the optical device in the embodiment 4.
FIG. 8 is a schematic diagram of an equivalent stack model of a wedged/tapered waveguide.
FIG. 9 is a schematic diagram of an optical system/apparatus in the embodiment 5.
FIG. 10 is a schematic diagram of an equivalent stack model of light ray propagation in a partial region of a planar waveguide.
FIG. 11 is a schematic diagram of the optical device in the embodiment 6.
FIG. 12 is a schematic diagram of the optical device.
FIG. 13 is a schematic diagram of the optical device.

### DETAILED DESCRIPTION OF EMBODIMENTS

The present invention will be described in detail below in combination with specific embodiments. The embodiments below contribute to further understanding the present invention by those skilled in the art but do not limit the present invention in any form. It should be noted that variations and improvements still can be made by those skilled in the art without departing the concept of the present invention. These fall into the protection scope of the present invention.

### Embodiment 1

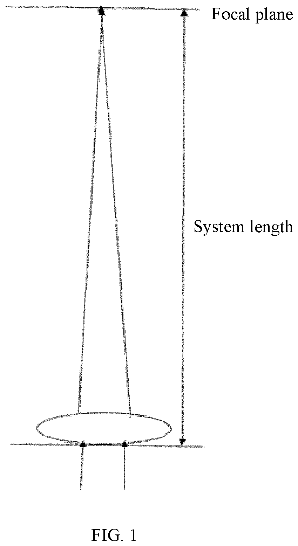

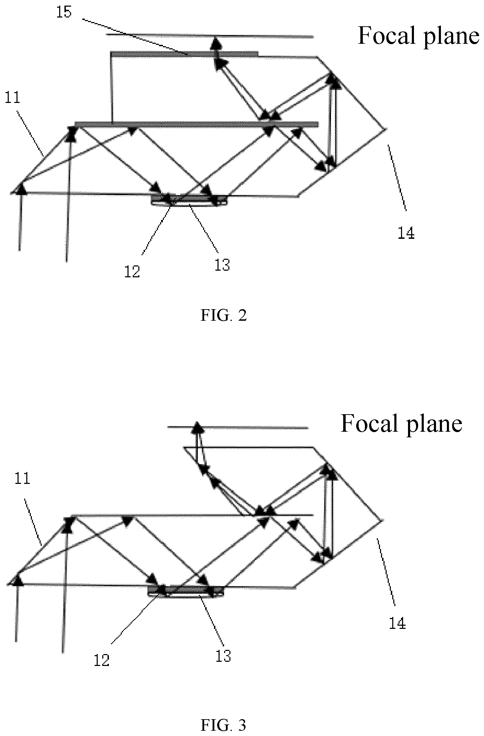

An optical device uses a waveguide in combination with a modulator to focus a light ray and shortens the lengths of an optical path. As shown in FIG. 1, the focal length of the current lens is 100 mm, the focal plane where the inputted parallel light is focused is located at 100 mm, and the length of the whole system is about 100 mm. As shown in FIG. 2 and FIG. 3, a waveguide system is used in the present invention. Two surfaces of a waveguide are parallel planes with a thickness of 4 mm. The parallel light is inputted into the waveguide from the first input interface. The first input interface 11 in the embodiment is formed such that a reflective film is coated on a side surface of the waveguide to reflect the input light ray into the waveguide (the reflective film can also be replaced by the prism or a surface-relief grating(SRG), the microlens film and the like). The incident angle between the light ray inputted into the waveguide and each of the upper and lower surfaces of the waveguide is larger than the total reflection angle. The light ray is propagated in the waveguide, and arrives at the second input/output interface 12 on the lower surface after experiencing total reflection once. The second input/output interface 12 on the lower surface is connected to a reflector 13 (a light modulator). The reflector and the waveguide are made of the same material (having the same refractive index with regard to the same wavelength). The lower surface of the reflector has a certain curvature and is coated with the reflective film and the reflector can focus the inputted parallel light to 100 mm after being reflected. At the input/output interface in this position, the reflector (the upper surface) is glued to a specific position of the waveguide by using UV optical adhesive made of the similar material with the waveguide (their refractive index and their dispersion coefficient are close). The parallel light rays inputted into the reflector are reflected by the lower surface to return to the waveguide again, and are focused after being modulated by the reflector. Experiencing reflection many times, the light ray enters the third input/output interface 14. This input/output interface is formed by two side surfaces forming angles of about ±45°with the upper and lower surfaces of the waveguide and coated with the reflective films (the interface can also be formed by gluing the triangular prisms coated with the reflective films on the surfaces to the side surfaces of the top and bottom waveguides). The light is coupled into the top waveguide through the interface for further propagation. There is a tiny gap between the lower surface of the top waveguide and the upper surface of the bottom waveguide, guaranteeing that the light is not directly incident to the top waveguide from the bottom waveguide (or the lower surface of the top waveguide is coated with the reflective film or other films shown in FIG. 2 to separate it from the bottom waveguide). The light propagated to a position close to the focal plane in the waveguide medium is guided out of the waveguide from the fourth input/output interface 15. The fourth input/output interface 15 can be a film with a micro-structure (for example, the microprism, the SGR and the like) or the light can be coupled out by the inclined side surface shown in FIG. 3 coated with the reflective film or coupled out by a prism. As the light ray is mainly propagated in the waveguide, compared with the original lens system having the length of about 100 mm, the length of the present invention is greatly shortened to be less than 10 mm.

In the embodiment, the second input/output interface is an adhesive layer formed by gluing the reflector with the waveguide and has no special design. It can be construed as a part of the light modulator itself and do not correspond to a special substance.

In addition, in the above embodiment, as the light ray injected to the reflector from the waveguide is off-axis, the reflector can be in an off-axis design to reduce aberration and can further be manufactured by using a material with a greater refractive index than that of the waveguide medium, so that the off-axis angle of the light ray inputted into the reflector is reduced.

In addition, the curved surface of the above reflector can be made from the same material through which the waveguide is made. The reflector manufactured with the waveguide by way of integral molding or injection molding is coated with the reflective film rather than being connected to the waveguide by way of gluing after the waveguide formed.

### Embodiment 2

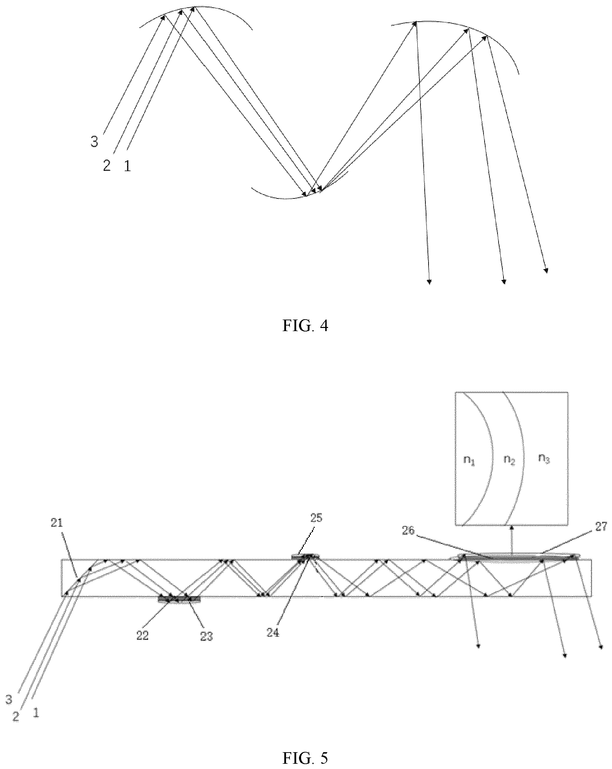

As shown in FIG. 5, the embodiment describes a system including a plurality of optical modulation devices, and the equivalent optical system thereof is shown in FIG. 4. Light rays 1, 2 and 3 coupled into a waveguide through an input/output interface 21 arrive at an input/output interface 22 after experiencing total reflection. The input/output interface 22 is glued with an optical modulator 23. The optical modulator 23 returns the modulated light rays to the waveguide, and the light rays propagated several times arrive at an input/output interface 24. The input/output interface 24 is glued with an optical modulator 25. The optical modulator 25 modulates the incident light rays and reflect them to the waveguide, and the light rays arrive at an input/output interface 26 after experiencing a series of total reflection. The input/output interface 26 is glued with an optical modulator 27. The input/output interface 26 is different from the previous light input/output interfaces, in which different regions of the input/output interface 26 are coated with films with different refractive indexes, respectively, so that the incident light at different angles can be controlled to be coupled out in different regions, respectively. For example, the angle of the light ray 1 arriving at the region coated with a film with the refractive index being *n*₁ is *θ*₁, *n*₁ is smaller than the refractive index *n* of the waveguide itself, and the angle meets the condition n sin *θ*₁ < *n*₁, so that the light ray 1 is outputted from the waveguide after being coupled out and reflected by the optical modulator 27. The angle of the light ray 2 arriving at the region coated with a film with the refractive index being *n*₁ is *θ*₂, and the angle meets the condition *n* sin *θ*₂ > *n*₁, so that the light ray 2 experiencing total reflection again arrives at the region coated with a film with the refractive index being *n*₃, n sin *θ*₂ < *n*₃, and the light ray 2 is outputted from the waveguide after being coupled out and reflected by the optical modulator 27. The angle of the light ray 3 arriving at the region coated with a film with the refractive index being *n*₃ is *θ*₃, the angle meets the condition *n* sin *θ*₃ < *n*₃, so that the light ray 3 is outputted from the waveguide after being coupled out and reflected by the optical modulator 27.

In the above embodiment, when the light ray does not accord with the design requirement in the emergent position of the input/output interface, the interfaces can be coated with films with different refractive indexes to control the emergent positions of the light rays, so as to control the positions of the light rays incident into the optical modulators. The thickness of the film is very small, and is usually controlled between several microns and dozens of microns, which only produces tiny influence on the whole optical system. Under some circumstances, the influence of the thickness can often be neglected.

In the above embodiment, an anti-reflection film can further be coated between the light input/output interface and the waveguide and/or the optical modulation device to improve the light efficiency.

In the above embodiment, a polarizing device (for example, a 1/4 wave plate) can further be arranged as a part of the optical modulator 27 between the original optical modulator 27 and the input/output interface 26, and a polarizer is attached to the part of the lower surface of the waveguide or a polarizer is coated on the part of the lower surface of the waveguide. When the inputted light is linearly polarized light, the light is incident into the modulator though the 1/4 wave plate and reflected back the polarizing direction is rotated at 90° after passing through the 1/4 wave plate again. When the light is incident to the polarizer or the polarizer on the lower surface, the light modulated by the optical modulator 27 will exit in the polarizing direction being consistent with that of the polarizer. The light not coupled out from the input/output interface 26 and modulated by the optical modulator 27 in the waveguide is still in the original polarizing direction and will be filtered out by the polarizer.

In an application of the above embodiment, the system is an AR near-eye display. The film coated on the reflecting surface of the optical modulator 27 is transflective (or the light ray incident from the waveguide satisfies the total reflection condition on the curved surface 27 according to the design, there is a certain gap between the modulator and the subsequent device or the space therebetween is filled with a medium with a certain refractive index, so that the light ray satisfies the total reflection condition, and in this case, the curved surface 27 does not need to be coated with the anti-reflection/highly-reflective film, and thus the utilization ratio of the light ray can be improved). A device is glued behind the reflecting surface (or a tiny gap is reserved), wherein the form of a corresponding curved surface of the device is totally identical to that of the reflecting surface and the other surface of the device is a plane. The two surfaces both have very high transmittance, and can couple external light to the optical modulator 27. A part of light will enter the waveguide through the transflective surface of the optical modulator 27. As the form of the surface on one side is totally identical to that of the curved surface of the optical modulator 27, modulation of the external environmental light can be compensated, so that a viewer can see the external environmental light passing the optical modulator 27 through the waveguide and the image light reflected by the optical modulator 27. The other surface of the device added in the embodiment can further be the curved surface for compensating errors of eyes of the viewer with myopia/farsightedness/astigmatism, thereby achieving the functions of spectacles (errors of human eyes caused by light inputted by the waveguide can be calibrated through the above-mentioned optical devices 23, 25 and 27). Alternatively, the modulation device is added to the other surface of the waveguide corresponding to the device 27, and meanwhile, the light outputted by the waveguide and the external environmental light are calibrated, so that the viewer with deficiencies such as myopia/farsightedness can see all the images clearly.

The devices in the embodiment 2 can be used as lenses of a photographic system according to the principle of optical reversibility, and CCD/CMOS devices are arranged near the image element interface (interface 21 here) of the same first optical device, so that the condition of the eyes of the viewer (eye tracking) can be shot. The outputted image is adjusted according to the condition of the eyes of the viewer (for example, focal distance, position of the image being watched and the like).

Alternatively, the input/output interface and the adjusting device can be further reasonably arranged on the same first optical device to shoot the external scene (the environmental light) through the device. The inputted environmental light can be filtered to be linear polarized light in one direction through the input/output interface, and the image light outputted to the viewer from the image element through the first optical device is linear polarized light in the other direction, so that the modulators connected to the first optical device can selectively process the environmental light or the image light (or the input/output interfaces of part of modulation devices may be non-selected, and the environmental light and the image light both are modulated) according to the polarizing selectivity of the corresponding input/output interfaces. By means of the method, the near-eye display and the photography and camera shooting can be realized simultaneously through one device/system.

### Embodiment 3

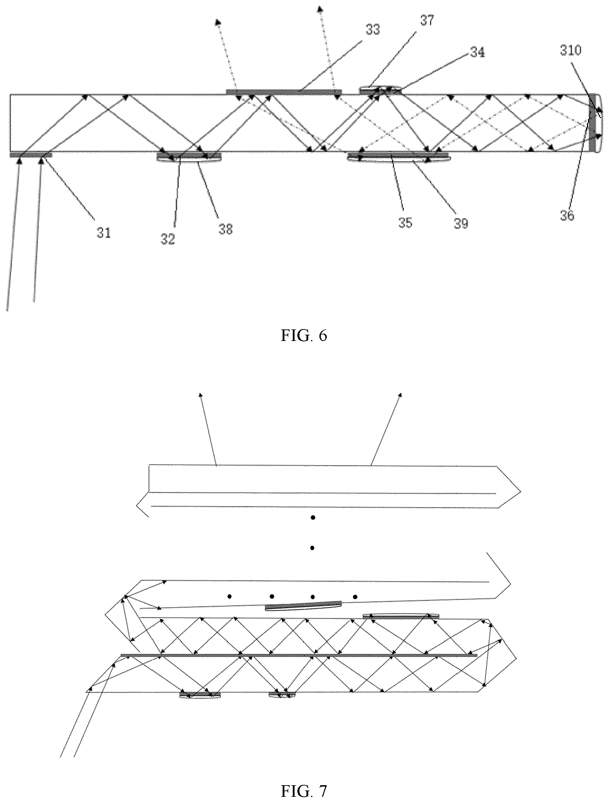

As shown in FIG. 6, the input/output interface 31 is the SRG, the initial input light is linearly polarized light, and the light ray inputted into the waveguide successively arrives at the input/output interfaces 32, 33, 34, 35 and 36. The input/output interfaces 33, 34, and 35 have the light ray selective design and are coated with films with polarization selectivity. The input/output interface 34 can couple light with the polarization direction consistent with that of the initial incident light to the modulation device 37 glued therewith, and the light with the polarization direction perpendicular to that of the initial incident light will not be guided into the modulation device 37 and will be directly returned to the waveguide for further propagation according to the path of original reflection. The input/output interfaces 33 and 35 can couple the light with the polarization direction perpendicular to that of the initial incident light to the corresponding modulation devices, and the light with the polarization direction consistent with that of the initial incident light will be directly returned to the waveguide for further propagation according to the path of original reflection. The initial input light ray coupled to the modulation device 38 glued therewith through the input/output interface 32 is propagated to the input/output interface 33. Owing to selectivity on polarization direction, the light will not be coupled out of the waveguide by the input/output interface 33 but will be continuously propagated to the input/output interface 34 along the original reflection path and then is coupled into the corresponding modulation device 37 by the input/output interface 34. After being modulated, a part of the light is propagated to the position of the input/output interface 35 and the other part thereof is propagated to other regions of the waveguide. However, owing to polarization selectivity of the input/output interface 35, the light propagated to the input/output interface 35, like the light ray propagated to other regions of the waveguide, will be reflected and propagated to the input/output interface 36 on the side surface of the waveguide. The input/output interface 36 is provided on a side edge of the waveguide. The input/output interface 36 is glued with the modulator 310. The modulator 310 includes an electrically controllable device (it can be replaced by a common wave plate or an optical polarization rotator) and a reflecting mirror surface with a certain optical curvature coated with the reflective film (it can be a planar reflector or the reflective film is directly coated on indium tin oxide (ITO) glass on a surface behind a liquid crystal according to specific optical designs). The light ray modulated by the modulator 310 is reflected in the polarization direction with rotation of 90° and is reflected to the original waveguide. When the light ray arrives at the input/output interface 35, as the polarization direction has been changed, the light ray will be coupled into the optical modulator 39, and is reflected to the waveguide after being modulated. When the light ray arrives at the original input/output interface 34, as the polarization direction has been perpendicular to the initial inputted light, the light ray will not be guided into the modulation device 37 but is propagated continuously along the reflection path. Finally, the light ray arrives at the input/output interface 33. As the polarization direction changes, the light ray will be coupled out of the waveguide from the input/output interface 33 at the time. The input/output interfaces 33 and 35 are coated with dielectric films with different refractive indexes in regions of the surface of the waveguide. Like the input/output interface 26 in the embodiment 2, the light ray in accordance with the polarization requirement exits in a correct position of the interface through angular control.

In the embodiment, the wavelength of the inputted light ray can further be changed as needed. For example, a control system inputs light rays with different wavebands into the waveguide at different times (for example, time division multiplexing display in a display system). An electrically controlled liquid crystal device in the optical modulator 310 can realize a 90° optical rotation function for light with different wavebands by modulating the liquid crystals by means of electric control.

### Embodiment 4

As shown in FIG. 7, the first optical device in embodiment 4 is formed by combining a plurality of waveguides by means of modulation devices (coupling devices such as the triangular prism coated with the reflective film) connected to the input/output interfaces. There is no gap between the upper and lower layers of part of the combined waveguide. The waveguides are differentiated due to the coated film and different refractive indexes of the waveguide material. There is a certain gap between the upper and lower layers of part of the combined waveguide for accommodating the input/output interfaces and the optical modulation devices connected thereto. There are wedged waveguides with upper and lower surfaces unparallel in the combined waveguides (the incident angle between the light ray and the surface will be changed once the light ray is reflected on the upper or lower surfaces), so that the angle of the light ray can be controlled. The light ray is coupled out of the waveguide at the right position and enter the modulation device (the input/output interface can be omitted, the interface and the modulation device are integrated, and angular control can further be realized) through angular differentiation, or the light ray is better controlled to be coupled out of the waveguide in combination with the coated film with changed refractive index. The wedged waveguide (or a waveguide having a curved surface) plays another role of controllably changing the angle of the light ray (capable of increasing or decreasing the angle, depending on whether the input and output end are the thick end or the thin end of the waveguide), so that the light can be easily modulated by the following system. In the embodiment, the waveguides are different in thickness, and can be connected together through different input/output interfaces (for example, the triangular prisms with different side lengths coated with the reflective films). Materials used by the waveguides can also be different, so that the light is better modulated in combination of the modulation devices.

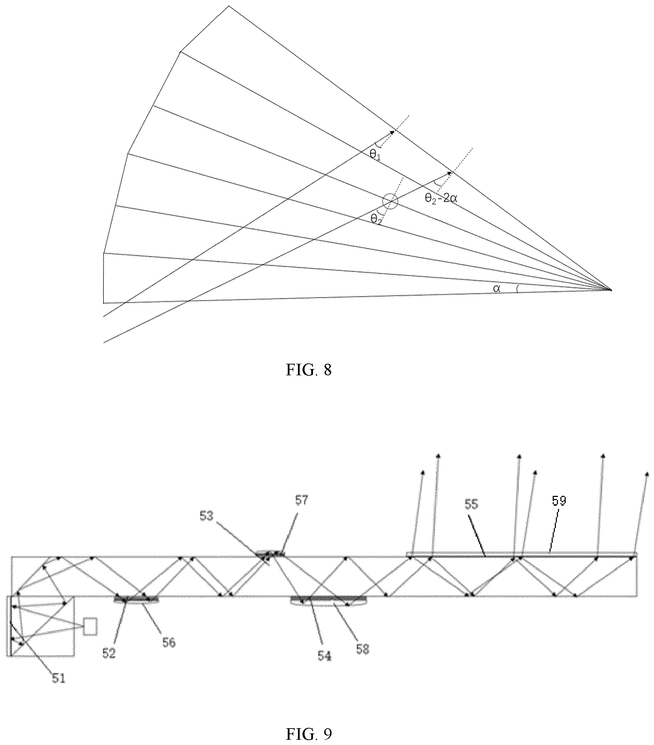

It is noted that the wedged waveguide is added in the embodiment. The included angle between the light ray and the surface of the waveguide will change by 2*α*, when the light rays experience reflection once on the upper and lower surfaces of the waveguide during propagation in the wedged waveguide, wherein *α* is the included angle between two extended surfaces of the wedged waveguide. As shown in FIG. 8 (a stack model for the wedged/triangular/conical waveguide), the light ray is incident from the thick end of the waveguide. If the light ray is incident from the thin end of the waveguide, the included angle between the light ray and the surface decreases by 2*α* once the light ray is reflected on the upper and lower surfaces. If the light ray is incident from the thick end, the included angle between the light ray and the surface increases by 2*α* once the light ray is reflected on the upper and lower surfaces. The angle of the incident light ray can be controllably changed through the wedge waveguide. The light ray is coupled out at a proper position of the waveguide (a common method is to make all light rays coupled out of the waveguide experience the same times of reflection in the waveguide or the light rays experience the same times of reflection in the waveguide from the previous interface to the next interface) by way of angular control and selection. Besides, the light rays are better coupled out with angular selection in combination with a mode of coating the films with different refractive indexes in different regions of the surface. The upper and lower surfaces of the above wedged waveguide can either be connected to various optical modulation devices through the input/output interfaces, or connected to nothing, for angular pre-control of light propagation for the next waveguide.

In the above embodiment, the plurality of waveguides are connected in a Z-shaped stack. In a variable example, the waveguides can also be connected in various required shapes such as L shape according to the requirement of the system on spatial shape.

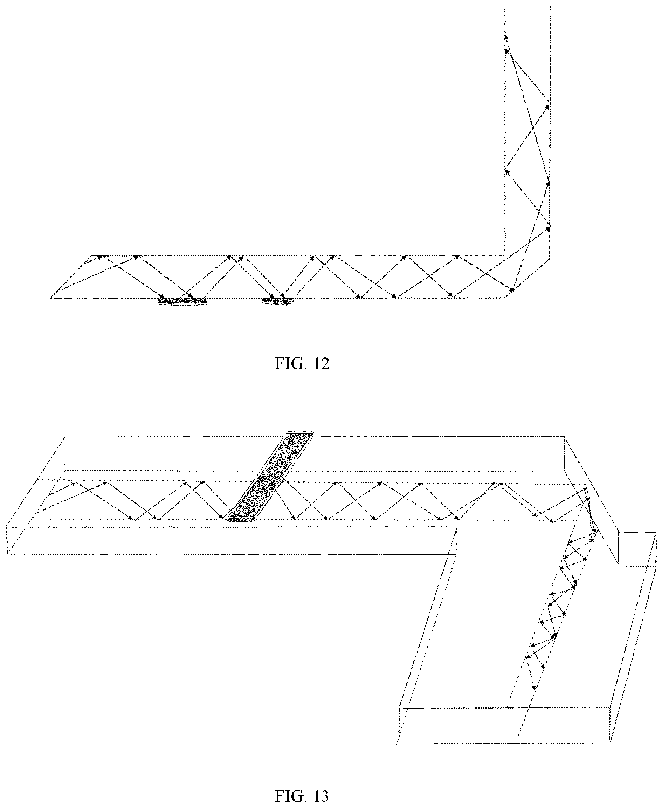

In the above embodiment, due to the Z-shaped or L-shaped connection, the propagation planes (the planes formed by light segments of the same light ray reflected twice in the waveguide) in two waveguides connected are parallel (for example, as shown FIG. 7 and FIG. 12) or the propagation planes (the planes formed by light segments of the same light ray reflected twice in the waveguide) in two waveguides connected are perpendicular or form a certain angle (for example, as shown in FIG. 13). The connection can further be a combination of the above two modes.

In the embodiment, the optical device can be applied as a microlens system, and is applied to a photography and camera shooting system of a mobile phone and a wearable device as it is externally connected to the photosensitive device (for example, a photographic film, a CCD/CMOS device) through the input/output interface.

### Embodiment 5

As shown in FIG. 9, embodiment 5 is a head-mounted display system applied to the field of AR/VR. The system includes RGB three-color LED light sources. Red, green and blue light rays are outputted respectively according to a timing sequence by an external electronic control system. The light rays passing through a polarization beam splitter (PBS) become linearly polarized light incident to an LCoS panel behind. The LCoS adopts intensity modulation. After polarization is changed, the light rays are reflected to the PBS again. The PBS guides the image light into the waveguide through the input/output interface 51 (the polarization prism PBS here) according to polarization. The refractive index of the waveguide is *n*. The light rays are propagated by total reflection in the waveguide, and successively pass through the input/output interfaces 52, 53 and 54, and then the light rays are modulated by corresponding optical modulation devices 56, 57 and 58 to various parallel light corresponding in angle (the light rays correspond to infinitely-far images, and the light can further be unparallel light, so that the light rays are modulated to images with certain image distances). Different regions of the input/output interfaces 52, 53 and 54 are coated with films with different refractive indexes (or film layers with gradually changing refractive indexes). The modulated light rays arrive at the input/output interface 55 and the optical modulation device 59 (55 and 59 can be the same device to function as the input/output interface and the modulator). In the embodiment, the optical modulation device 59 is the SRG. A part of energy of the light rays is coupled out of the waveguide and the other part thereof is propagated and reflected continuously along the original path and then arrives at the input/output interface 55 again. The part of the energy is then coupled out of the waveguide again (the light rays can be partially coupled out of the waveguide many times through the grating), so that the pupil-expanding function is realized through the SRG, thereby bringing a huge eyebox to the viewer.

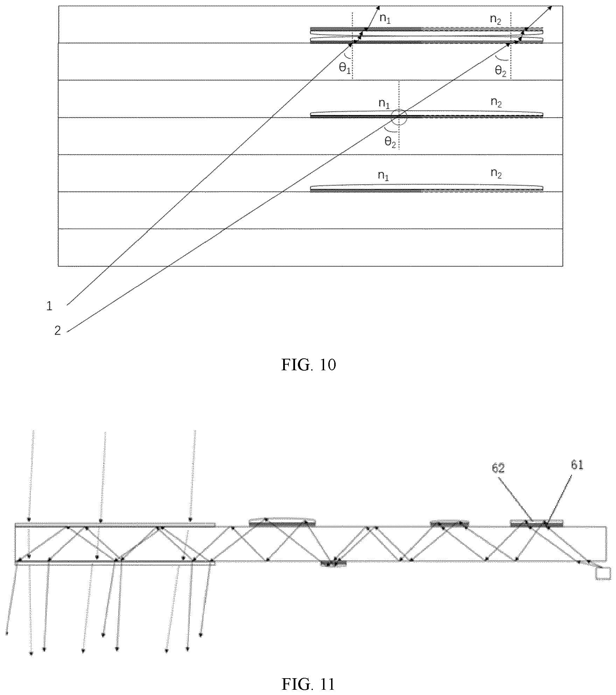

The different regions of the interfaces are coated with the film layers with different refractive indexes, which satisfies the following conditions: all the light rays coupled out of the waveguide by the corresponding interfaces experience the same times of reflection in the waveguide before being coupled out of the waveguide (or from being coupled into the waveguide last time by the previous input/outer interface to being coupled out of the waveguide this time). For example, as shown in FIG. 10 (the equivalent stack model for light ray propagation in part of regions in the planar waveguide), after being inputted by the previous input/output interface, the light rays are propagated in the waveguide, and the incident angles between the light rays 1 and 2 and the surface of the waveguide are *θ*₁ and *θ*₂, respectively. After the light ray 1 experiences reflections three times on both the upper and lower surfaces, the light ray 1 arrives at the position of the next interface where a film with the refractive index being *n*₁ is coated, but n sin *θ*₁ < *n*₁, so that the light ray 1 is coupled out of the waveguide and modulated by the corresponding modulation device and then returns to the waveguide for further propagation. After the light ray 2 experiences reflection twice on both the upper and lower surfaces, the light ray 2 arrives at the position of the next interface is coated with a film with the refractive index being *n*₁, but *n* sin *θ*₂ > *n*₁, so that the position where the light ray 2 experiencing reflection once more on each of the upper and lower surfaces arrives at the interface wherein a film with the refractive index being *n*₂ is coated, *n* sin *θ*₂ > *n₂,* therefore, the light ray 2 is coupled out of the waveguide and modulated by the corresponding modulation device and then returns to the waveguide for further propagation. In conclusion, by way of coating the different regions of the interfaces with the films with different refractive indexes, the incident light rays can be selected. In the embodiment, the light rays experience reflection three times in the waveguide are coupled out of the waveguide by means of angle control, the rest of light rays will not be coupled out of the waveguide and will not be modulated by the corresponding modulation devices. The anti-reflection film layers can further be coated between the film layers with different refractive indexes in the interfaces of the waveguide to improve the transmittance of the light meeting the requirement, thereby reducing the stray light reflected.

In the embodiment, a film layer with a certain refractive index can further be coated on the surface of the waveguide between the previous input/output interface and the next input/output interface (different regions of the surface can be coated with the film layers with different refractive indexes or the film layers with continuously changing refractive indexes and can be construed as special interfaces). As the angle of the light coupled out of the waveguide modulated by the modulator in the previous interface has changed and has been different from that of the light not coupled out of the waveguide (in most cases, the light can be regarded as the stray light). In this way, the stray light can be coupled out of the waveguide by means of angular selectivity of the film layer (for example, the stray light is absorbed or is no longer returned to the waveguide). This method can further eliminate part of stray light.

In a variation of the embodiment, LCoS, used as an image generating element (imaging element), can further be flatly attached to the input/output interface like other optical devices, the light is incident obliquely through the polarizer from the input/output interface, and the LCoS surface uses the ITO glass with a high refractive index, so that the off-axis angle of the incident light is decreased. After the light rays are modulated, the polarization directions of the image light and the stray light are different. After being coupled back to the waveguide, the stray light is filtered out by way of polarization selection but images are continuously propagated in the waveguide.

In variations of the embodiment, the optical device can further be replaced by other image generating elements a DMD panel, a micro-electromechanical systems (MEMS) scanner, an OLED, a Micro LED, while correspondingly changing its way of being coupled into the waveguide. In a variation of the embodiment, the light is coupled out of the surface grating of the waveguide finally, and an array waveguide (formed by combining prism arrays), a volume grating or a film with a certain micro structure (for example, a microprism array) can further replace the surface grating to play the same role of expanding the pupil (expansion of the optical aperture).

### Embodiment 6

As shown in FIG. 11, embodiment 6 is a head-mounted display system. The light source is incident from the side surface of the waveguide and enters the modulation device 62 from the input/output interface 61. In the embodiment, the modulation device 62 is an image generating device/imaging element such as an LCD, an LCoS, a DMD or a MEMS scanner (or self-luminous image element devices such as an OLED and a Micro LED also can be used so that a light source is not needed for illumination in this case). There are devices capable of dynamically adjusting the focal length/wavefront in the optical modulation devices (for example, a spatial light modulator for phase modulation, an LCoS, a liquid crystal lens, a zoomable lens and the like for phase modulation). Light modulated by the plurality of input/output interfaces and the corresponding optical modulation devices is propagated to the devices dynamically modulating the wavefront to realize real-time change of image distances and aberration adjustment, so that the final image distance seen by the viewer can be changed dynamically in real time according to the demand (the image distance is usually controlled and adjusted by an electronic signal). For example, within the previous period, the image seen by the viewer includes an object with the image distance of 0.3 m, and within the next period, according to demand, the control system controls the optical modulator to change the wavefront modulation of the inputted light through an electronic signal, so that the images seen by the viewer includes two objects with the image distances of 0.5 m and 5 m.

In the embodiment, the image generating element can output a kinoform/hologram by using the spatial light modulator (for example, LCoS for phase modulation or two LCoS applying double phase modulation). Using only one device realizes the imaging and the modulation/adjustment of image depth and aberrations of the images at the same time without additionally arranging a dynamic spatial light modulator that adjusts the image distance and the aberration.

In the embodiment, errors such as myopia/farsightedness/astigmatism of the eyes of the viewer can further be compensated by the dynamic spatial light modulator, so that the viewer can watch the images in the system/device in the embodiment clearly without wearing spectacles. When the embodiment is the AR/MR device, a modulation device can further be additionally arranged on the surface of the waveguide facing the external environment (as shown in FIG. 11, the dynamic spatial light modulator is arranged before the finally coupled in/out the light path and does not modulate the external environmental light guided into the waveguide), so that the additionally arranged modulation device can compensate the external environmental light (similar to lens of spectacles), and therefore, the viewer with visual defects can simultaneously see virtual images outputted by the device and the external environment clearly.

In the embodiment, a photosensitive device (for example, CCD/CMOS) can further be arranged near the image generating element 62. The externally inputted environmental light and/or images of human eyes (for eye tracking) are focused on the photosensitive element through the waveguide by using a principle of reversibility of optical path, so as to realize photo shooting and video recording functions (the environmental light is inputted from the side of the waveguide facing the external environmental light, and the image light of human eyes can be inputted from the other side of the waveguide facing the human eyes). An external control system processes the information on the CCD/CMOS and then adjusts the outputted images of the image generating elements according to the result. For example, the spatial light modulator is controlled to adjust the image distances of the displayed images by means of the external image information and/or current dioptric information of human eyes.

In a variable example of the embodiment, a transparent dynamic spatial light modulator can be further used on the side of the waveguide facing the external environment to compensate the external environmental light (at the time, the dynamic spatial light modulator for modulating the image distances/aberration of the images is arranged behind the final coupled out/in optical path and affects the external environmental light guided into the waveguide), so that the added modulator can compensate the external environmental light and pre-compensate the environmental light affected by the following spatial light modulator modulating the images displayed (the pre-compensation parameters here change dynamically according to the parameters of the image modulating spatial light modulator) so as to compensate influence of subsequent modulation (compensation for eyes of the viewer with visual defects can further be added, for example, myopia, farsightedness, astigmatism and the like), so that the viewer with visual defects can simultaneously see virtual images outputted by the device and the external environment clearly.

In the description of the application, it should be understood that orientation or position relationships indicated by terms: upper, lower, front, back, left, right, vertical, horizontal, top, bottom, inner, outer and the like are orientation or position relationships indicated by the drawings and are only to describe the disclosure and simplify the description rather than indicates or implies that the indicated devices or components must have specific orientations and are configured and operated in the specific orientations. Therefore, it cannot be construed as limitations to the application.

Descriptions of specific embodiments of the present invention are made above. It is needed to understand that the present invention is not limited to the specific embodiments, and those skilled in the art can make various variations or modifications within the scope of the claims without affecting the substantial contents of the present invention. In the absence of conflict, the embodiments of the application and features in the embodiments can be combined with one another arbitrarily.

## Claims

1. An optical device, comprising a first optical device having a plurality of surfaces, wherein the first optical device has input/output interfaces; and
at least one input/output interface is connected to an optical modulating device, and at least one optical modulating device guides a light ray back to the first optical device after modulating the light ray outputted by the input/output interface.

2. The optical device according to claim 1, wherein the light ray is propagated in the first optical device.

3. The optical device according to claim 1, wherein at least two surfaces in the plurality of surfaces are parallel to each other.

4. The optical device according to claim 1, wherein a preset angle is formed between at least two surfaces in the plurality of surfaces and/or at least one of the at least two surfaces is a curved surface.

5. The optical device according to claim 1, wherein different sections of the surfaces are coated with one or more films, respectively.

6. The optical device according to claim 5, wherein the film is any one or more of an anti-reflection film, a highly reflective film, and a film with a micro-structure, a grating, a polarization dependent structure, a wavelength selection structure or an angle selection structure.

7. The optical device according to claim 1, wherein the light ray experiences total reflection/or reflection at least once in the first optical device.

8. The optical device according to claim 1, wherein the first optical device is a waveguide device, and the light ray is propagated by total reflection in a waveguide.

9. The optical device according to claim 1, wherein the input/output interface comprises a light selective design.

10. The optical device according to claim 9, wherein the light selective design comprises selecting any one or more of an angle, a polarization direction, a wavelength and an input/output time point of inputted light.

11. The optical device according to claim 1, wherein the input/output interface is coated with a film.

12. The optical device according to claim 1, wherein the input/output interface is coated with a film with gradually varied refractive index and/or is coated with films with different refractive indexes in different regions.

13. The optical device according to claim 12, wherein owing to the film, the number of reflection of the light rays experienced before being coupled out of the first optical device from the input/output interface is identical, alternatively, the number of reflection of the light rays experienced between being previously coupled in the first optical device and being currently coupled out the first optical device is identical.

14. The optical device according to claim 4, wherein owing to the preset angle or the form of the curved surface, the number of reflection of the light rays experienced before being coupled out of the first optical device from the input/output interface is identical, alternatively, the number of reflection of the light rays experienced between being previously coupled in the first optical device and being currently coupled out the first optical device is identical.

15. The optical device according to claim 1, wherein the input/output interface comprises at least one of the following conditions: a grating is used; a prism is used; a polarizing prism is used; a microlens/microprism/microreflector is used; a microlens array/microprism array/microreflector array is used; a triangular prism is used; a reflector is used; a triangular reflector is used; a polarizer is used; and an optical filter is used.

16. The optical device according to claim 1, wherein the optical modulating device comprises any one or more of a reflector, a microreflector, a microreflector array, a lens, a microlens, a microlens array, a prism, a microprism, a microprism array, a diffraction device, a grating device, a wave plate, a polarizer, an optical rotation device and an optical filter.

17. The optical device according to claim 1, wherein the optical modulating device comprises a spatial light modulator.

18. The optical device according to claim 17, wherein the spatial light modulator comprises any one or more of a liquid crystal on silicon (LCoS), a digital mirror device (DMD), an organic light emitting diode (OLED), a Micro LED and a micro laser beam scanner.

19. The optical device according to claim 17, wherein the spatial light modulator uses intensity and/or phase modulation.

20. The optical device according to claim 17, wherein the spatial light modulator is capable of performing dynamic modulation according to external signals.

21. The optical device according to claim 1, wherein the first optical device is formed by combining a plurality of optical devices through the input/output interface.

22. The optical device according to claim 21, wherein the combining comprises L-shaped folded combining and/or Z-shaped combining at a certain angle.

23. The optical device according to claim 21, wherein parameters of the optical devices combined together are identical or different.

24. The optical device according to claim 23, wherein the parameters comprise any one or more of a thickness, a length, an included angle between a surface, a form of the surface, a device material and a coated film.

25. The optical device according to claim 1, wherein the input/output interface is connected to a photosensitive component comprising at least one of a film, a charge coupled device(CCD) and a complementary metal-oxide-semiconductor transistor(CMOS).

26. The optical device according to claim 1, wherein the first optical device has a plurality of input/output interfaces, and the light ray is inputted and/or outputted from the different input/output interfaces.

27. The optical device according to claim 1, wherein the first optical device has a plurality of input/output interfaces, and the light ray is dynamically inputted and/or outputted from the different input/output interfaces selectively.

28. An optical system, comprising the optical device according to any one of claims 1-27.

29. An optical apparatus, comprising the optical device according to any one of claims 1-27 or the optical system according to claim 28.
